# EUROPÄISCHE PATENTSCHRIFT

(11) **EP 2 206 742 B1**
(45) Veröffentlichungstag und Bekanntmachung des Hinweises auf die Patenterteilung: **19.10.2011**
(21) Anmeldenummer: 09179360.4
(22) Anmeldetag: 16.12.2009
(51) Int. Cl.: C08L 7/00, C07F 7/18

(54) **Silatranhaltige Partikel**
Particle containing silatrane
Particule contenant du silatrane

(30) Priorität: 19.12.2008 DE 102008054967
(43) Veröffentlichungstag der Anmeldung: 14.07.2010
(73) Patentinhaber: Evonik Degussa GmbH, 45128 Essen (DE)
(72) Erfinder: Korth, Karsten, 79639, Grenzach-Wyhlen (DE); Friehmelt, Rainer, 50935, Köln (DE); Weber, Mandy, 86633, Neuburg/Donau (DE); Lehnbaur, Lothar, 86676, Ehekirchen (DE); Hoppe, Christian, 85057, Ingolstadt (DE)

(56) Entgegenhaltungen:
- EP-A2- 1 045 006
- EP-A2- 1 754 749
- EP-A2- 1 795 534
- WO-A1-2007/085521
- WO-A1-2008/084885

## Beschreibung

Die Erfindung betrifft silatranhaltige Partikel, deren Herstellung und Verwendung in Kautschukmischungen.

Es ist bekannt, dass hydrolysierbare schwefelhaltige Organosiliciumverbindungen in der Lage sind mit Hydroxylgruppen enthaltenden Füllstoffen, wie natürlichen und synthetischen Silicaten, Carbonaten, Gläsern und Metalloxiden, zu reagieren. Sie werden dabei zur Oberflächenmodifizierung und Haftvermittlung verwendet. In der kautschukverarbeitenden Industrie werden sie als Haftvermittler zwischen dem verstärkenden Füllstoff und dem eingesetzten Polymer eingesetzt (EP 1683801 A2, EP 1285926 A1).

Ein erheblicher Nachteil bei der Verwendung von bekannten Alkoxysilan-Kopplungsagenzien, speziell von Bis(trialkoxysilylalkyl)polysulfid-Kopplungsagenzien, ist die Freisetzung stöchiometrischer Mengen flüchtiger Alkohole, wie beispielsweise Methanol und Ethanol, in die Umwelt während und nach der Anbindung des Alkoxysilans an den Füllstoff.

Ferner sind aus US 6,433,206, DE 25 42 534, DE 24 05 758 und DE 27 12 866 polysulfidhaltige Silatrane bekannt. Sie können als Verstärkungsadditive in silikatische Füllstoffe enthaltenden Kautschukmischungen eingesetzt werden.

Aus EP 1754749 A1 und WO 2007085521 A1 sind mercapto-, chloro- und thiocyanato- funktionalisierte Silatrane bzw. polysulfidisch modifizierte Silatrane und deren Verwendung in Kautschukmischungen bekannt.

Ferner sind aus WO 2008084885 A1 Mischungen von polysulfidisch modifizierten Silatranen mit alkoxygruppenhaltigen Silanen und deren Verwendung in Kautschuken bekannt.

Nachteil der bekannten Kautschukmischungen ist der hohe Staubanteil und/oder die schlechte pneumatische Förderbarkeit der funktionalisierten Silatrane.

Aufgabe der vorliegenden Erfindung ist es, funktionalisierte Silatrane in einer geeigneten Form zur Verfügung zu stellen, die einen niedrigen Staubanteil und eine gute pneumatische Förderbarkeit aufweisen.

Gegenstand der Erfindung sind silatranhaltige Partikel, welche dadurch gekennzeichnet sind, dass diese mindestens einen Kautschuk und 55 bis 99 Gew.-%, bevorzugt 60 bis 90 Gew.-%, besonders bevorzugt 65 bis 85 Gew.-%, ganz besonders bevorzugt 75 bis 85 Gew.-%, bezogen auf das Gesamtgewicht der silatranhaltigen Partikeln, eines Silatrans der allgemeinen Formel I, 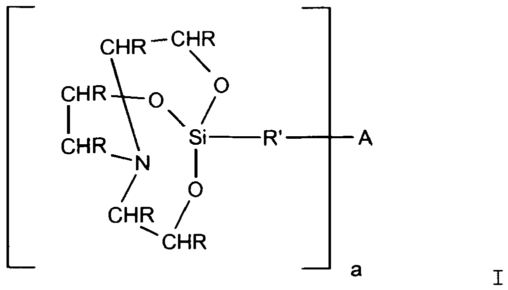 enthalten, wobei R gleich oder verschieden und H, eine cyclische, geradkettige oder verzweigte C₁ bis C₁₂-, vorzugsweise C₁ bis C₈-, besonders bevorzugt C₁-, Alkylgruppe, eine Carboxylgruppe (-COOH), eine substituierte oder unsubstituierte Arylgruppe, bevorzugt eine Phenylgruppe, oder eine substituierte oder unsubstituierte Aralkylgruppe ist,
R' gleich oder verschieden und eine verzweigte oder unverzweigte, gesättigte oder ungesättigte, aliphatische, aromatische oder gemischt aliphatische /aromatische zweibindige C₁-C₃₀-, vorzugsweise C₁-C₂₀-, besonders bevorzugt C₂-C₂₀-, ganz besonders bevorzugt C₃-C₁₅-, außerordentlich bevorzugt C₄-C₁₅-, Kohlenwasserstoffgruppe ist,
a gleich 1 oder 2 ist,
A für a gleich 1 -SH, -NH₂, -SCN, -Cl, -H, -OR" , -O-CH₂-CH/O\CH₂, -O-C(O)-C(CH₃)=CH₂, -NHR", -NR"₂, - CH=CH₂, -S-C(O)-R", -S-C(O)-N(R")₂ oder -S-C(S)-N(R")₂ ist, mit R" gleich oder verschieden und H, eine cyclische, geradkettige oder verzweigte C₁ bis C₁₈-, vorzugsweise C₁ bis C₁₂-, besonders bevorzugt C₁ bis C₈-, Alkylgruppe, eine substituierte oder unsubstituierte Arylgruppe, bevorzugt eine Phenylgruppe, oder eine substituierte oder unsubstituierte Aralkylgruppe ist,
und
A für a gleich 2 -Sₓ- ist, mit x eine mittlere Schwefelkettenlänge von 1,1 bis 5, vorzugsweise 1,5 bis 4,5, besonders bevorzugt 3 bis 4 bzw. 1,8 bis 3, ganz besonders bevorzugt 3,5 bis 3,8 bzw. 1,9 bis 2,6, ist.

Für A gleich -H kann R' bevorzugt -CH=CH- und -CH₂-CH=CH- sein.

Das mittlere Partikelgewicht kann 0,001 bis 200 g/Partikel, vorzugsweise 0,01 bis 50 g/Partikel, besonders bevorzugt 0,05 bis 10 g/Partikel, ganz besonders bevorzugt 0,1 bis 1 g/Partikel, betragen.

Das mittlere Partikelgewicht wird bestimmt durch das gemeinsame Auswiegen von 100 Partikeln (mittleres Partikelgewicht = Gewicht der 100 Partikeln / 100).

Die silatranhaltigen Partikel können eine Längsachse besitzen. Die silatranhaltigen Partikel können rotationssymmetrisch in einer, zwei oder drei räumlichen Richtungen sein.

Die silatranhaltigen Partikel können runde oder eckige Querschnitte zur Längsachse besitzen. Runde Querschnitte können kreisförmig oder oval sein. Kreisförmige Querschnitte können bevorzugt sein. Eckige Querschnitte können 3- bis 100-, bevorzugt 3- bis 20-, besonders bevorzugt 4- bis 15-, ganz besonders bevorzugt 4- bis 12-, eckige Querschnitte sein.

Die silatranhaltigen Partikel können unabhängig voneinander 0,01 bis 50 cm, bevorzugt 0,1 bis 10 cm, besonders bevorzugt 0,1 bis 5 cm, ganz besonders bevorzugt 0,1 bis 3 cm, in jeder räumlichen Dimension lang sein.

Bevorzugt können die silatranhaltigen Partikel in Zylinderform oder in nahezu Zylinderform sein.

Die silatranhaltigen Partikel können Kugelform, nahezu Kugelform oder eine Tropfenform besitzen.

Die Kautschuke in den silatranhaltigen Partikeln können sein:
- Naturkautschuk (NR);
- Polybutadien (BR);
- Polyisopren (IR);
- Styrol/Butadien-Copolymerisate (SBR), beispielsweise Emulsions-SBR (E-SBR) oder Lösungs-SBR (L-SBR). Die Styrol/Butadien-Copolymerisate können einen Styrolgehalt von 1 bis 60 Gew.-%, vorzugsweise 2 bis 50 Gew.-%, besonders bevorzugt 10 bis 40 Gew.-%, ganz besonders bevorzugt 15 bis 35 Gew.-%, aufweisen;
- Chloroprenkautschuk (CR);
- Isobutylen/Isopren-Copolymerisate (IIR) ;
- Butadien/Acrylnitril-Copolymere mit Acrylnitrilgehalten von 5 bis 60 Gew.-% (NBR), vorzugsweise 10 bis 50 Gew.-% (NBR), besonders bevorzugt 10 bis 45 Gew.-% (NBR), ganz besonders bevorzugt 19 bis 45 Gew.-% (NBR);
- teilhydrierter oder vollständig hydrierter NBR-Kautschuk (HNBR);
- Ethylen/Propylen/Dien-Copolymerisate (EPDM) oder Ethylen/Propylen-Copolymerisate (EPM);
- oben genannte Kautschuke, die zusätzlich funktionelle Gruppen besitzen, wie zum Beispiel Carboxy- , Silanol- oder Epoxygruppen, beispielsweise Epoxidierter NR, Carboxyfunktionalisierter NBR oder Silanol- (-SiOH) bzw. Silylalkoxy-funktionalisierter (-Si-OR) SBR;
   sowie Mischungen dieser Kautschuke.

Die Kautschukmenge in den silatranhaltigen Partikeln kann 0,1 bis 45 Gew.-%, bevorzugt 5 bis 40 Gew.-%, besonders bevorzugt 10 bis 35 Gew.-%, ganz besonders bevorzugt 15 bis 25 Gew.-%, bezogen auf das Gesamtgewicht der silatranhaltigen Partikeln, betragen.

Die silatranhaltigen Partikel können keine Kautschukbeschleuniger, beispielsweise Thiazole, Sulfenamide, Thiurame, Thioharnstoffe, Thiocarbonate und Dithiocarbamate, enthalten.

Die silatranhaltigen Partikel können keine Zweitbeschleuniger, beispielsweise Guanidine und Aldehydamine, enthalten.

Die silatranhaltigen Partikel können keinen Schwefel enthalten.

Die silatranhaltigen Partikel können aus Kautschuk und Silatran der allgemeinen Formel I bestehen.

Die silatranhaltigen Partikel können aus Kautschuk, Öl, vorzugsweise Mineralöl, und Silatran der allgemeinen Formel I bestehen.

Die Elongation der einzelnen silatranhaltigen Partikel kann 1 bis 20, bevorzugt 1 bis 10, besonders bevorzugt 1 bis 7, ganz besonders bevorzugt 1 bis 5, betragen. Der Mittelwert der Elongation der silatranhaltigen Partikel kann 1 bis 20, bevorzugt 1 bis 10, besonders bevorzugt 1 bis 7, ganz besonders bevorzugt 1 bis 5, betragen.

Das Aspektverhältnis der einzelnen silatranhaltigen Partikel kann 1 bis 20, bevorzugt 1 bis 10, besonders bevorzugt 1 bis 7, ganz besonders bevorzugt 1 bis 5, betragen. Der Mittelwert des Aspektverhältnisses der silatranhaltigen Partikel kann 1 bis 20, bevorzugt 1 bis 10, besonders bevorzugt 1 bis 7, ganz besonders bevorzugt 1 bis 5, betragen.

Die Konvexität der einzelnen silatranhaltigen Partikel kann 0,1 bis 1, bevorzugt 0,3 bis 1, besonders bevorzugt 0,5 bis 0,99, ganz besonders bevorzugt 0,7 bis 0,99, betragen. Der Mittelwert der Konvexität der silatranhaltigen Partikel kann 0,1 bis 1, bevorzugt 0,3 bis 1, besonders bevorzugt 0,5 bis 0,99, ganz besonders bevorzugt 0,7 bis 0,99, betragen.

Die Rundheit der einzelnen silatranhaltigen Partikel kann 0,1 bis 1, bevorzugt 0,3 bis 1, besonders bevorzugt 0,5 bis 0,99, ganz besonders bevorzugt 0,7 bis 0,99, betragen. Der Mittelwert der Rundheit der silatranhaltigen Partikel kann 0,1 bis 1, bevorzugt 0,3 bis 1, besonders bevorzugt 0,39 bis 0,99, betragen. Bestimmung der Elongation, Konvexität, Aspektverhältnis und Rundheit:
Zur Bestimmung der Faktoren werden die Partikel auf einem Leuchttisch der Firma Kaiser (Prolite 5000) platziert und mit einer Video-Kamera (Olympus Soft Imaging Solutions GmbH, Modell ColorView 12, 12bit Farb-Kamera mit 1280 x 1024 Pixeln, Macro-Objektiv von Olympus) und dem iTEM-Bildanalysesoftware (AnalySis Five) von der Firma Olympus Soft Imaging Solutions GmbH digitalisiert. Anschließend wird das Bild in ein 8-Bit Grauwertbild konvertiert. Über eine Schwellwertsetzung werden festgelegt, welche Grauwerte zu den Teilchen und welche zum Hintergrund gehören. Anschließend werden die Teilchen detektiert und die Messung aller Parameter gleichzeitig durchgeführt. Es werden 5 Bilder mit insgesamt 320 Teilchen vermessen. Zum Schluß werden die statistischen Parameter sowie die Histogramme berechnet.

Die Elongation beschreibt die Länglichkeit des Partikels unter Verwendung der Sphärizität.

Das Aspektverhältnis beschreibt das maximale Höhen-Breiten-Verhältnis eines einhüllenden Rechtecks des Partikels.

Die Konvexität beschreibt das Verhältnis der Fläche des Partikels zu der Fläche seiner konvexen Hülle.

Die Rundheit beschreibt die Rundheit des Partikels über zentrale Momente.

Die erfindungsgemäßen silatranhaltigen Partikel können neben dem Silatran der allgemeinen Formel I zusätzlich Additiv enthalten.

Das Additiv kann in den erfindungsgemäßen silatranhaltigen Partikeln zu 0,1 bis 44 Gew.-%, bevorzugt 1 bis 40 Gew.-%, besonders bevorzugt 3 bis 35 Gew.-%, besonders bevorzugt 5 bis 30 Gew.-%, bezogen auf die silatranhaltigen Partikel, enthalten sein.

Das Additiv kann ein Additivgemisch sein. Additive können anorganische oder organische Additive sein. Das Additivgemisch kann anorganische und/oder organische Additive enthalten.

Organische Additve können synthetische oder natürliche Wachse, synthetische oder natürliche Öle, Carbonsäuren, Alkylamine der Formel NH₂(Alkyl), NH(Alkyl)₂ oder N(Alkyl)₃, Polyethylenoxide, Polypropylenoxide, alkyl- oder arylsubstituierte Polyethylenoxide oder Polypropylenoxide sein.

Anorganische Additive können gefällte oder pyrogene Kieselsäuren, natürliche oder synthetische Silikate, natürlich oder synthetische Oxide, beispielsweise Aluminiumoxid, oder Ruße sein.

Bevorzugte synthetische oder natürliche Wachse können Wachse mit Schmelzpunkten, Schmelzbereichen oder Erweichungsbereichen zwischen 50° und 200°C, bevorzugt 70° und 180°C, besonders bevorzugt zwischen 90° und 150°C, ganz besonders bevorzugt zwischen 100° und 120°C, sein.

Die verwendeten Wachse können olefinische Wachse sein. Die verwendeten Wachse können gesättigte und ungesättigte Kohlenwasserstoffketten enthalten.

Die verwendeten Wachse können langkettige Alkane oder/und langkettige Carbonsäuren enthalten. Organische Wachse können Olefinwachse oder Paraffinwachse sein.

Synthetische oder natürliche Öle können aromatische, naphthenische, mineralische, silikonische oder glycerinhaltige Öle sein. Vorzugsweise können als mineralische Öle paraffinbasierende Mineralöle eingesetzt werden.

Die organischen Additive können Polymere oder Oligomere sein. Polymere oder Oligomere können heteroatomenthaltende Polymere oder Oligomere, zum Beispiel Ethylenvinylalkohol oder/und Polyvinylalkohole, sein.

Die organischen Additive können Kautschukhilfsstoffe, wie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Verzögerer sowie Aktivatoren, wie beispielsweise Triethanolamin oder Hexantriol, sein.

Als anorganische Additive können für die erfindungsgemäßen silatranhaltigen Partikel eingesetzt werden:
- Ruße, beispielsweise Flammruß, Furnaceruß, Gasruß oder Thermalruß. Die Ruße können eine BET-Oberfläche von 20 bis 200 m²/g haben. Die Ruße können gegebenenfalls auch Heteroatome, wie zum Beispiel Si, enthalten.
- Amorphe Kieselsäuren, hergestellt zum Beispiel durch Fällung von Lösungen von Silikaten (gefällte Kieselsäuren) oder Flammenhydrolyse von Siliciumhalogeniden (pyrogene Kieselsäuren). Die amorphen Kieselsäuren können eine spezifische Oberfläche von 5 bis 1000 m²/g, vorzugsweise 20 bis 400 m²/g, (BET-Oberfläche) und eine Primärteilchengrößen von 10 bis 400 nm haben. Die Kieselsäuren können gegebenenfalls auch als Mischoxide mit anderen Metalloxiden, wie Al-, Mg-, Ca-, Ba-, Zn- und Titanoxiden, vorliegen.
- Synthetische Silikate, wie Aluminiumsilikat oder Erdalkalisilikate, beispielsweise Magnesiumsilikat oder Calciumsilikat. Die synthetischen Silikate können eine BET-Oberfläche von 20 bis 400 m²/g und einen Primärteilchendurchmesser von 10 bis 400 nm haben.
- Synthetische oder natürliche Aluminiumoxide und - hydroxide.
- Natürliche Silikate, wie Kaolin und andere natürlich vorkommende Kieselsäuren.
- Carbonate, bevorzugt Calciumcarbonat.
- Glasfasern und Glasfaserfolgeprodukte oder Mikroglaskugeln.

Bevorzugt können amorphe Kieselsäuren, hergestellt durch Fällung von Lösungen von Silikaten (gefällte Kieselsäuren), mit BET-Oberflächen von 20 bis 400 m²/g eingesetzt werden.

Der Schmelzpunkt, Schmelzbereich oder Erweichungsbereich der erfindungsgemäßen silatranhaltigen Partikel kann zwischen 0 und 250°C, bevorzugt zwischen 50 und 200°C, besonders bevorzugt zwischen 70 und 150°C, ganz besonders bevorzugt zwischen 90 und 150°C, betragen.

Die Gruppe R' in den Silatranen der allgemeinen Formel I kann CH₂, CH₂CH₂, CH₂CH₂CH₂, CH₂CH₂CH₂CH₂, CH(CH₃), CH₂CH(CH₃), CH(CH₃)CH₂, C(CH₃)₂, CH(C₂H₅), CH₂CH₂CH(CH₃), CH(CH₃)CH₂CH₂, CH₂CH(CH₃)CH₂
oder 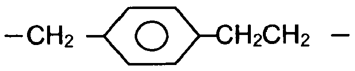 bedeuten.

Silatrane der allgemeinen Formel I können Mischungen aus Verbindungen der allgemeinen Formel I sein.

Der Anteil an S2-Verbindungen in Mischungen der Silatrane der allgemeinen Formel I mit a = 2 kann mehr als 50 Gew.-%, bevorzugt mehr als 60 Gew.-%, besonders bevorzugt mehr als 70 Gew.-%, ganz besonders bevorzugt mehr als 80 Gew.-%, bezogen auf die Menge an eingesetzter Silatranverbindung der allgemeinen Formel I, betragen.

Der Anteil an S3-Verbindungen in Mischungen der Silatrane der allgemeinen Formel I mit a = 2 kann 0,5 bis 60 Gew.-%, bevorzugt 1 bis 50 Gew.-%, besonders bevorzugt 1 bis 45 Gew.-%, ganz besonders bevorzugt 1 bis 40 Gew.-%, bezogen auf die Menge an eingesetzten Silatranen der allgemeinen Formel I, betragen.

Der Anteil an S4-Verbindungen in Mischungen der Silatrane der allgemeinen Formel I mit a = 2 kann mehr als 0,5 Gew.-%, bevorzugt mehr als 5 Gew.-%, besonders bevorzugt mehr als 9 Gew.-%, ganz besonders bevorzugt mehr als 15 Gew.-%, außerordentlich bevorzugt mehr als 25 Gew.-%, bezogen auf die Menge an eingesetzten Silatranen der allgemeinen Formel I, betragen.

Silatranverbindungen der Formel I mit a = 1 können solche, wie in EP1795534 A beschrieben sein.

Silatranverbindungen der Formel I mit a = 1 können sein

Cl-CH₂-Si(-O-CH₂-CH₂-)₃N,

Cl-CH₂-CH₂-Si(-O-CH₂-CH₂-)₃N,

Cl-CH₂-CH₂-CH₂-Si(-O-CH₂-CH₂-)₃N,

Cl-CH₂-CH(CH₃)-CH₂-Si(-O-CH₂-CH₂-)₃N,

Cl-CH(CH₃)-CH₂-CH₂-Si(-O-CH₂-CH₂-)₃N,

Cl-CH₂-Si(-O-CH(CH₃)-CH₂-)₃N,

Cl-CH₂-CH₂-Si(-O-CH(CH₃)-CH₂-)₃N,

Cl-CH₂-CH₂-CH₂-Si(-O-CH(CH₃)-CH₂-)₃N,

Cl-CH₂-CH(CH₃)-CH₂-Si(-O-CH(CH₃)-CH₂-)₃N,

Cl-CH(CH₃)-CH₂-CH₂-Si(-O-CH(CH₃)-CH₂-)₃N,

HS-CH₂-Si(-O-CH₂-CH₂-)₃N,

HS-CH₂-CH₂-Si(-O-CH₂-CH₂-)₃N,

HS-CH₂-CH₂-CH₂-Si(-O-CH₂-CH₂-)₃N,

HS-CH₂-CH(CH₃)-CH₂-Si(-O-CH₂-CH₂-)₃N,

HS-CH(CH₃)-CH₂-CH₂-Si(-O-CH₂-CH₂-)₃N,

HS-CH₂-Si(-O-CH(CH₃)-CH₂-)₃N,

HS-CH₂-CH₂-Si(-O-CH(CH₃)-CH₂-)₃N,

HS-CH₂-CH₂-CH₂-Si(-O-CH(CH₃)-CH₂-)₃N,

HS-CH₂-CH(CH₃)-CH₂-Si(-O-CH(CH₃)-CH₂-)₃N,

HS-CH(CH₃)-CH₂-CH₂-Si(-O-CH(CH₃)-CH₂-)₃N,

C₅H₁₁-C(O)-S-CH₂-Si(-O-CH₂-CH₂-)₃N,

C₅H₁₁-C(O)-S-CH₂-CH₂-Si(-O-CH₂-CH₂-)₃N,

C₅H₁₁-C(O)-S-CH₂-CH₂-CH₂-Si(-O-CH₂-CH₂-)₃N,

C₅H₁₁-C(O)-S-CH(CH₃)-CH₂-CH₂-Si(-O-CH₂-CH₂-)₃N,

C₅H₁₁-C(O)-S-CH₂-CH(CH₃)-CH₂-Si(-O-CH₂-CH₂-)₃N,

C₇H₁₅-C(O)-S-CH₂-Si(-O-CH₂-CH₂-)₃N,

C₇H₁₅-C(O)-S-CH₂-CH₂-Si(-O-CH₂-CH₂-)₃N,

C₇H₁₅-C(O)-S-CH₂-CH₂-CH₂-Si(-O-CH₂-CH₂-)₃N,

C₇H₁₅-C(O)-S-CH₂-CH(CH₃)-CH₂-Si(-O-CH₂-CH₂-)₃N,

C₇H₁₅-C(O)-S-CH(CH₃)-CH₂-CH₂-Si(-O-CH₂-CH₂-)₃N,

C₉H₁₉-C(O)-S-CH₂-Si(-O-CH₂-CH₂-)₃N,

C₉H₁₉-C(O)-S-CH₂-CH₂-Si(-O-CH₂-CH₂-)₃N,

C₉H₁₉-C(O)-S-CH₂-CH₂-CH₂-Si(-O-CH₂-CH₂-)₃N,

C₉H₁₉-C(O)-S-CH₂-CH(CH₃)-CH₂-Si(-O-CH₂-CH₂-)₃N,

C₉H₁₉-C(O)-S-CH(CH₃)-CH₂-CH₂-Si(-O-CH₂-CH₂-)₃N,

C₁₁H₂₃-C(O)-S-CH₂-Si(-O-CH₂-CH₂-)₃N,

C₁₁H₂₃-C(O)-S-CH₂-CH₂-Si(-O-CH₂-CH₂-)₃N,

C₁₁H₂₃-C(O)-S-CH₂-CH₂-CH₂-Si(-O-CH₂-CH₂-)₃N,

C₁₁H₂₃-C(O)-S-CH₂-CH(CH₃)-CH₂-Si(-O-CH₂-CH₂-)₃N,

C₁₁H₂₃-C(O)-S-CH(CH₃)-CH₂-CH₂-Si(-O-CH₂CH₂-)₃N,

C₁₃H₂₇-C(O)-S-CH₂-Si(-O-CH₂-CH₂-)₃N,

C₁₃H₂₇-C(O)-S-CH₂-CH₂-Si(-O-CH₂-CH₂-)₃N,

C₁₃H₂₇-C(O)-S-CH₂-CH₂-CH₂-Si(-O-CH₂-CH₂-)₃N,

C₁₃H₂₇-C(O)-S-CH₂-CH(CH₃)-CH₂-Si(-O-CH₂-CH₂-)₃N,

C₁₃H₂₇-C(O)-S-CH(CH₃)-CH₂-CH₂-Si(-O-CH₂-CH₂-)₃N,

C₁₅H₃₁-C(O)-S-CH₂-Si(-O-CH₂-CH₂-)₃N,

C₁₅H₃₁-C(O)-S-CH₂-CH₂-Si(-O-CH₂-CH₂-)₃N,

C₁₅H₃₁-C(O)-S-CH₂-CH₂-CH₂-Si(-O-CH₂-CH₂-)₃N,

C₁₅H₃₁-C(O)-S-CH₂-CH(CH₃)-CH₂-Si(-O-CH₂-CH₂-)₃N,

C₁₅H₃₁-C(O)-S-CH(CH₃)-CH₂-CH₂-Si(-O-CH₂-CH₂-)₃N,

C₁₇H₃₅-C(O)-S-CH₂-Si(-O-CH₂-CH₂-)₃N,

C₁₇H₃₅-C(O)-S-CH₂-CH₂-Si(-O-CH₂-CH₂-)₃N,

C₁₇H₃₅-C(O)-S-CH₂-CH₂-CH₂-Si(-O-CH₂-CH₂-)₃N,

C₁₇H₃₅-C(O)-S-CH₂-CH(CH₃)-CH₂-Si(-O-CH₂-CH₂-)₃N,

C₁₇H₃₅-C(O)-S-CH(CH₃)-CH₂-CH₂-Si(-O-CH₂-CH₂-)₃N,

Phenyl-C(O)-S-CH₂-CH₂-CH₂-Si(-O-CH₂-CH₂-)₃N,

Phenyl-C(O)-S-CH₂-CH(CH₃)-CH₂-Si(-O-CH₂-CH₂-)₃N,

Phenyl-C(O)-S-CH(CH₃)-CH₂-CH₂-Si(-O-CH₂-CH₂-)₃N,

C₅H₁₁-C(O)-S-CH₂-Si(-O-CH(CH₃)-CH₂-)₃N,

C₅H₁₁-C(O)-S-CH₂-CH₂-Si(-O-CH(CH₃)-CH₂-)₃N,

C₅H₁₁-C(O)-S-CH₂-CH₂-CH₂-Si(-O-CH(CH₃)-CH₂-)₃N,

C₅H₁₁-C(O)-S-CH₂-CH(CH₃)-CH₂-Si(-O-CH(CH)-CH₂-)₃N,

C₅H₁₁-C(O)-S-CH(CH₃)-CH₂-CH₂-Si(-O-CH(CH)-CH₂-)₃N,

C₇H₁₅-C(O)-S-CH₂-Si(-O-CH(CH₃)-CH₂-)₃N,

C₇H₁₅-C(O)-S-CH₂-CH₂-Si(-O-CH(CH₃)-CH₂-)₃N,

C₇H₁₅-C(O)-S-CH₂-CH₂-CH₂-Si(-O-CH(CH₃)-CH₂-)₃N,

C₇H₁₅-C(O)-S-CH₂-CH(CH₃)-CH₂-Si(-O-CH(CH₃)-CH₂-)₃N,

C₇H₁₅-C(O)-S-CH(CH₃)-CH₂-CH₂-Si(-O-CH(CH₃)-CH₂-)₃N,

C₉H₁₉-C(O)-S-CH₂-Si(-O-CH(CH₃)-CH₂-)₃N,

C₉H₁₉-C(O)-S-CH₂-CH₂-Si(-O-CH(CH₃)-CH₂-)₃N,

C₉H₁₉-C(O)-S-CH₂-CH₂-CH₂-Si(-O-CH(CH₃)-CH₂-)₃N,

C₉H₁₉-C(O)-S-CH₂-CH(CH₃)-CH₂-Si(-O-CH(CH₃)-CH₂-)₃N,

C₉H₁₉-C(O)-S-CH(CH)-CH₂-CH₂-Si(-O-CH(CH₃)-CH₂-)₃N,

C₁₁H₂₃-C(O)-S-CH₂-Si(-O-CH(CH₃)-CH₂-)₃N,

C₁₁H₂₃-C(O)-S-CH₂-CH₂-Si(-O-CH(CH₃)-CH₂-)₃N,

C₁₁H₂₃-C(O)-S-CH₂-CH₂-CH₂-Si(-O-CH(CB₃)-CH₂-)₃N,

C₁₁H₂₃-C(O)-S-CH₂-CH(CH₃)-CH₂-Si(-O-CH(CH₃)-CH₂-)₃N,

C₁₁H₂₃-C(O)-S-CH(CH₃)-CH₂-CH₂-Si(-O-CH(CH₃)-CH₂-)₃N,

C₁₃H₂₇-C(O)-S-CH₂-Si(-O-CH(CH₃)-CH₂-)₃N,

C₁₃H₂₇-C(O)-S-CH₂-CH₂-Si(-O-CH(CH₃)-CH₂-)₃N,

C₁₃H₂₇-C(O)-S-CH₂-CH₂-CH₂-Si(-O-CH(CH₃)-CH₂-)₃N,

C₁₃H₂₇-C(O)-S-CH₂-CH(CH₃)-CH₂-Si(-O-CH(CH₃)-CH₂-)₃N,

C₁₃H₂₇-C(O)-S-CH(CH₃)-CH₂-CH₂-Si(-O-CH(CH₃)-CH₂-)₃N,

C₁₅H₃₁-C(O)-S-CH₂-Si(-O-CH(CH₃)-CH₂-)₃N,

C₁₅H₃₁-C(O)-S-CH₂-CH₂-Si(-O-CH(CH₃)-CH₂-)₃N,

C₁₅H₃₁-C(O)-S-CH₂-CH₂-CH₂-Si(-O-CH(CH₃)-CH₂-)₃N,

C₁₅H₃₁-C(O)-S-CH₂-CH(CH₃)-CH₂-Si(-O-CH(CH₃)-CH₂-)₃N,

C₁₅H₃₁-C(O)-S-CH(CH₃)-CH₂-CH₂-Si(-O-CH(CH₃)-CH₂-)₃N,

C₁₇H₃₅-C(O)-S-CH₂-Si(-O-CH(CH₃)-CH₂-)₃N,

C₁₇H₃₅-C(O)-S-CH₂-CH₂-Si(-O-CH(CH₃)-CH₂-)₃N,

C₁₇H₃₅-C(O)-S-CH₂-CH₂-CH₂-Si(-O-CH(CH₃)-CH₂-)₃N,

C₁₇H₃₅-C(O)-S-CH₂-CH(CH₃)-CH₂-Si(-O-CH(CH₃)-CH₂-)₃N,

C₁₇H₃₅-C(O)-S-CH(CH₃)-CH₂-CH₂-Si(-O-CH(CH₃)-CH₂-)₃N,

Phenyl-C(O)-S-CH₂-CH₂-CH₂-Si(-O-CH(CH₃)-CH₂-)₃N,

Phenyl-C(O)-S-CH₂-CH(CH₃)-CH₂-Si(-O-CH(CH₃)-CH₂-)₃Noder

Phenyl-C(O)-S-CH(CH₃)-CH₂-CH₂-Si(-O-CH(CH₃)-CH₂-)₃N.

Silatranverbindungen der Formel I mit a = 1 und M' ₌ S oder O können sein:

C₃H₇NH-C(M')-S-CH₂-Si(-O-CH₂-CH₂-)₃N,

C₃H₇NH-C(M')-S-CH₂-CH₂-Si(-O-CH₂-CH₂-)₃N,

C₃H₇NH-C(M')-S-CH₂-CH₂-CH₂-Si(-O-CH₂-CH₂-)₃N,

C₃H₇NH-C(M')-S-CH(CH₃)-CH₂-CH₂-Si(-O-CH₂-CH₂-)₃N,

C₃H₇NH-C(M')-S-CH₂-CH(CH₃)-CH₂-Si(-O-CH₂-CH₂-)₃N,

C₃H₅NH-C(M')-S-CH₂-Si(-O-CH₂-CH₂-)₃N,

C₃H₅NH-C(M')-S-CH₂-CH₂-Si(-O-CH₂-CH₂-)₃N,

C₃H₅NH-C(M')-S-CH₂-CH₂-CH₂-Si(-O-CH₂-CH₂-)₃N,

C₃H₅NH-C(M')-S-CH(CH₃)-CH₂-CH₂-Si(-O-CH₂-CH₂-)₃N,

C₃H₅NH-C(M')-S-CH₂-CH(CH₃)-CH₂-Si(-O-CH₂-CH₂-)₃N,

C₄H₉NH-C(M')-S-CH₂-Si(-O-CH₂-CH₂-)₃N,

C₄H₉NH-C(M')-S-CH₂-CH₂-Si(-O-CH₂-CH₂-)₃N,

C₄H₉NH-C(M')-S-CH₂-CH₂-CH₂-Si(-O-CH₂-CH₂-)₃N,

C₄H₉NH-C(M')-S-CH(CH₃)-CH₂-CH₂-Si(-O-CH₂-CH₂-)₃N,

C₄H₉NH-C(M')-S-CH₂-CH(CH₃)-CH₂-Si(-O-CH₂-CH₂-)₃N,

C₇H₁₅NH-C(M')-S-CH₂-Si(-O-CH₂-CH₂-)₃N,

C₇H₁₅NH-C(M')-S-CH₂-CH₂-Si(-O-CH₂-CH₂-)₃N,

C₇H₁₅NH-C(M')-S-CH₂-CH₂-CH₂-Si(-O-CH₂-CH₂-)₃N,

C₇H₁₅NH-C(M')-S-CH₂-CH(CH₃)-CH₂-Si(-O-CH₂-CH₂-)₃N,

C₇H₁₅NH-C(M')-S-CH(CH₃)-CH₂-CH₂-Si(-O-CH₂-CH₂-)₃N,

C₉H₁₉NH-C(M')-S-CH₂-Si(-O-CH₂-CH₂-)₃N,

C₉H₁₉NH-C(M')-S-CH₂-CH₂-Si(-O-CH₂-CH₂-)₃N,

C₉H₁₉NH-C(M')-S-CH₂-CH₂-CH₂-Si(-O-CH₂-CH₂-)₃N,

C₉H₁₉NH-C(M')-S-CH₂-CH(CH₃)-CH₂-Si(-O-CH₂-CH₂-)₃N,

C₉H₁₉NH-C(M')-S-CH(CH₃)-CH₂-CH₂-Si(-O-CH₂-CH₂-)₃N,

C₁₁H₂₃NH-C(M')-S-CH₂-Si(-O-CH₂-CH₂-)₃N,

C₁₁H₂₃NH-C(M')-S-CH₂-CH₂-Si(-O-CH₂-CH₂-)₃N,

C₁₁H₂₃NH-C(M')-S-CH₂-CH₂-CH₂-Si(-O-CH₂-CH₂-)₃N,

C₁₁H₂₃NH-C(M')-S-CH₂-CH(CH₃)-CH₂-Si(-O-CH₂-CH₂-)₃N,

C₁₁H₂₃NH-C(M')-S-CH(CH₃)-CH₂-CH₂-Si(-O-CH₂-CH₂-)₃N,

C₁₃H₂₇NH-C(M')-S-CH₂-Si(-O-CH₂-CH₂-)₃N,

C₁₃H₂₇NH-C(M')-S-CH₂-CH₂-Si(-O-CH₂-CH₂-)₃N,

C₁₃H₂₇NH-C(M')-S-CH₂-CH₂-CH₂-Si(-O-CH₂-CH₂-)₃N,

C₁₃H₂₇NH-C(M')-S-CH₂-CH(CH₃)-CH₂-Si(-O-CH₂-CH₂-)₃N,

C₁₃H₂₇NH-C(M')-S-CH(CH₃)-CH₂-CH₂-Si(-O-CH₂-CH₂-)₃N,

C₁₅H₃₁NH-C(M')-S-CH₂-Si(-O-CH₂-CH₂-)₃N,

C₁₅H₃₁NH-C(M')-S-CH₂-CH₂-Si(-O-CH₂-CH₂-)₃N,

C₁₅H₃₁NH-C(M')-S-CH₂-CH₂-CH₂-Si(-O-CH₂-CH₂-)₃N,

C₁₅H₃₁NH-C(M')-S-CH₂-CH(CH₃)-CH₂-Si(-O-CH₂-CH₂-)₃N,

C₁₅H₃₁NH-C(M')-S-CH(CH₃)-CH₂-CH₂-Si(-O-CH₂-CH₂-)₃N,

PhenylNH-C(M')-S-CH₂-CH₂-CH₂-Si(-O-CH₂-CH₂-)₃N,

PhenylNH-C(M')-S-CH₂-CH(CH₃)-CH₂-Si(-O-CH₂₋CH₂₋)₃N,

PhenylNH-C(M')-S-CH(CH₃)-CH₂-CH₂-Si(-O-CH₂-CH₂-)₃N,

C₄H₉NH-C(M')-S-CH₂-Si(-O-CH(CH₃)-CH₂-)₃N,

C₄H₉NH-C(M')-S-CH₂-CH₂-Si(-O-CH(CH₃)-CH₂-)₃N,

C₄H₉NH-C(M')-S-CH₂-CH₂-CH₂-Si(-O-CH(CH₃)-CH₂-)₃N,

C₄H₉NH-C(M')-S-CH₂-CH(CH₃)-CH₂-Si(-O-CH(CH₃)-CH₂-)₃N,

C₄H₉NH-C(M')-S-CH(CH₃)-CH₂-CH₂-Si(-O-CH(CH₃)-CH₂-)₃N,

C₇H₁₅NH-C(M')-S-CH₂-Si(-O-CH(CH₃)-CH₂-)₃N,

C₇H₁₅NH-C(M')-S-CH₂-CH₂-Si(-O-CH(CH₃)-CH₂-)₃N,

C₇H₁₅NH-C(M')-S-CH₂-CH₂-CH₂-Si(-O-CH(CH₃)-CH₂-)3N,

C₇H,₅NH-C(M')-S-CH₂-CH(CH₃)-CH₂-Si(-O-CH(CH₃)-CH₂-)₃N,

C₇H₁₅NH-C(M')-S-CH(CH₃)-CH₂-CH₂-Si(-O-CH(CH₃)-CH₂-)₃N,

C₉H₁₉NH-C(M')-S-CH₂-Si(-O-CH(CH₃)-CH₂-)₃N,

C₉H₁₉NH-C(M')-S-CH₂-CH₂-Si(-O-CH(CH₃)-CH₂-)₃N,

C₉H₁₉NH-C(M')-S-CH₂-CH₂-CH₂-Si(-O-CH(CH₃)-CH₂-)₃N,

C₉H₁₉NH-C(M')-S-CH₂-CH(CH₃)-CH₂-Si(-O-CH(CH₃)-CH₂-)₃N,

C₉H₁₉NH-C(M')-S-CH(CH₃)-CH₂-CH₂-Si(-O-CH(CH₃)-CH₂-)₃N,

C₁₁H₂₃NH-C(M')-S-CH₂-Si(-O-CH(CH₃)-CH₂-)₃N,

C₁₁H₂₃NH-C(M')-S-CH₂-CH₂-Si(-O-CH(CH₃)-CH₂-)₃N,

C₁₁H₂₃NH-C(M')-S-CH₂-CH₂-CH₂-Si(-O-CH(CH₃)-CH₂-)₃N,

C₁₁H₂₃NH-C(M')-S-CH₂-CH(CH₃)-CH₂-Si(-O-CH(CH₃)-CH₂-)₃N,

C₁₁H₂₃NH-C(M')-S-CH(CH₃)-CH₂-CH₂-Si(-O-CH(CH₃)-CH₂-)₃N,

C₁₃H₂₇NH-C(M')-S-CH₂-Si(-O-CH(CH₃)-CH₂-)₃N,

C₁₃H₂₇NH-C(M')-S-CH₂-CH₂-Si(-O-CH(CH₃)-CH₂-)₃N,

C₁₃H₂₇NH-C(M')-S-CH₂-CH₂-CH₂-Si(-O-CH(CH₃)-CH₂-)₃N,

C₁₃H₂₇NH-C(M')-S-CH₂-CH(CH₃)-CH₂-Si(-O-CH(-CH₃)-CH₂-)₃N,

C₁₃H₂₇NH-C(M')-S-CH(CH₃)-CH₂-CH₂-Si(-O-CH(-CH₃)-CH₂-)₃N,

C₁₅H₃₁NH-C(M')-S-CH₂-Si(-O-CH(CH₃)-CH₂-)₃N,

C₁₅H₃₁NH-C(M')-S-CH₂-CH₂-Si(-O-CH(CH₃)-CH₂-)3_{N},

C₁₅H₃₁NH-C(M')-S-CH₂-CH₂-CH₂-Si(-O-CH(CH₃)-CH₂-)₃N,

C₁₅H₃₁NH-C(M')-S-CH₂-CH(CH₃)-CH₂-Si(-O-CH(CH₃)-CH₂-)₃N,

C₁₅H₃₁NH-C(M')-S-CH(CH₃)-CH₂-CH₂-Si(-O-CH(CH₃)-CH₂-)₃N,

PhenylNH-C(M')-S-CH₂-CH₂-CH₂-Si(-O-CH(CH₃)-CH₂-)₃N,

PhenylNH-C(M')-S-CH₂-CH(CH₃)-CH₂-Si(-O-CH(CH₃)-CH₂-)₃N

oder

PhenylNH-C(M')-S-CH(CH₃)-CH₂-CH₂-Si(-O-CH(CH₃)-CH₂-)₃N.

Silatranverbindungen der Formel I mit a = 2 können sein

[N(C₂H₄O)₃Si(CH₂)₃]S₂[(CH₂)₃Si(OC₂H₄)₃N],

[N(C₂H₄O)₃Si(CH₂)₃]S₃[(CH₂)₃Si(OC₂H₄)₃N],

[N(C₂H₄O)₃Si(CH₂)₃]S₄[(CH₂)₃Si(OC₂H₄)₃N],

[N(C₂H₄O)₃Si(CH₂)₃]S₅[(CH₂)₃Si(OC₂H₄)₃N],

[N(C₂H₄O)₃Si(CH₂)₂]S₂[(CH₂)₂Si(OC₂H₄)₃N],

[N(C₂H₄O)₃Si(CH₂)₂]S₃[(CH₂)₂Si(OC₂H₄)₃N],

[N(C₂H₄O)₃Si(CH₂)₂]S₄[(CH₂)₂Si(OC₂H₄)₃N],

[N(C₂H₄O)₃Si(CH₂)₂]S₅[(CH₂)₂Si(OC₂H₄)₃N],

[N(C₂H₄O)₃Si(CH₂)]S₂[(CH₂)Si(OC₂H₄)₃N],

[N(C₂H₄O)₃Si(CH₂)]S₃[(CH₂)Si(OC₂H₄)₃N],

[N(C₂H₄O)₃Si(CH₂)]S₄[(CH₂)Si(OC₂H₄)₃N],

[N(C₂H₄O)₃Si(CH₂)]S₅[(CH₂)Si(OC₂H₄)₃N],

[N(C₂H₄O)₃Si-CH₂CH₂CH(CH₃)-]S₂[-CH(CH₃)CH₂CH₂₋Si(OC₂H₄)₃N],

[N(C₂H₄O)₃Si-CH₂CH₂CH(CH₃)-]S₃[-CH(CH₃)CH₂CH₂-Si(OC₂H₄)₃N],

[N(C₂H₄O)₃Si-CH₂CH₂CH(CH₃)-]S₄[-CH(CH₃)CH₂CH₂-Si(OC₂H₄)₃N],

[N(C₂H₄O)₃Si-CH₂CH₂CH(CH₃)-]S₅[-CH(CH₃)CH₂CH₂-Si(OC₂H4)₃N],

[N(CH₂-CH(Me)-O-)₃Si(CH₂)₃]S₂[(CH₂)₃Si(-O-CH(Me)-CH₂)₃N],

[N(CH₂-CH(Me)-O-)₃Si(CH₂)₃]S₃[(CH₂)₃Si(-O-CH(Me)-CH₂)₃N],

[N(CH₂-CH(Me)-O-)₃Si(CH₂)₃]S₄[(CH₂)₃Si(-O-CH(Me)-CH₂)₃N],

[N(CH₂-CH(Me)-O-)₃Si(CH₂)₃]S₅[(CH₂)₃Si(-O-CH(Me)-CH₂)₃N],

[N(CH₂-CH(Me)-O-)₃Si(CH₂)₂]S₂[(CH₂)₂Si(-O-CH(Me)-CH₂)₃N],

[N(CH₂-CH(Me)-O-)₃Si(CH₂)₂]S₃[(CH₂)₂Si(-O-CH(Me)-CH₂)₃N],

[N(CH₂-CH(Me)-O-)₃Si(CH₂)₂]S₄[(CH₂)₂Si(-O-CH(Me)-CH₂)₃N],

[N(CH₂-CH(Me)-O-)₃Si(CH₂)₂]S₅[(CH₂)₂Si(-O-CH(Me)-CH₂)₃N],

[N(CH₂-CH(Me)-O-)₃Si(CH₂)]S₂[(CH₂)Si(-O-CH(Me)-CH₂)₃N],

[N(CH₂-CH(Me)-O-)₃Si(CH₂)]S₃[(CH₂)Si(-O-CH(Me)-CH₂)₃N],

[N(CH₂-CH(Me)-O-)₃Si(CH₂)]S₄[(CH₂)Si(-O-CH(Me)-CH₂)₃N],

[N(CH₂-CH(Me)-O-)₃Si(CH₂)]S₅[(CH₂)Si(-O-CH(Me)-CH₂)₃N],

[N(CH₂-CH(Me)-O-)₃Si-CH₂CH₂CH(CH₃)-]S₂[-CH(CH₃)CH₂CH₂-Si(-O-CH(Me)-CH₂)₃N],

[N(CH₂-CH(Me)-O-)₃Si-CH₂CH₂CH(CH₃)-]S₃[-CH(CH₃)CH₂CH₂-Si(- O-CH(Me)-CH₂)₃N],

[N(CH₂-CH(Me)-O-)₃Si-CH₂CH₂CH(CH₃)-]S₄[-CH(CH₃)CH₂CH₂-Si(-O-CH(Me)-CH₂)₃N] oder

[N(CH₂-CH(Me)-O-)₃Si-CH₂CH₂CH(CH₃)-]S₅[-CH(CH₃)CH₂CH₂-Si(-O-CH(Me)-CH₂)₃N].

Aus den Silatranen der Formel I können durch Wasserzugabe Kondensationsprodukte, das heißt Oligo- und Polysiloxane gebildet werden. Die Oligo- und Polysiloxane können durch Oligomerisierung oder Cooligomerisierung der entsprechenden Silatrane der allgemeinen Formel I durch Wasserzugabe und dem Fachmann auf diesem Gebiet bekannte Additivzugabe und Verfahrensweise erhalten werden.

Die Silatrane der Formel I können auch Mischungen von Silatranen der allgemeinen Formel I mit Mischungen von oligomeren oder polymeren Siloxanen der Silatrane der allgemeinen Formel I sein.

Die Zusammensetzung der Gemische der Silatrane der allgemeinen Formel I kann durch Kernresonanzspektroskopie, bevorzugt durch ¹H-, ¹³C- und ²⁹Si-Kernresonanzspektroskopie, bestimmt werden. Die durchschnittliche Kettenlänge -Sₓ- in den Gemischen der erfindungsgemäßen Organosiliciumverbindungen kann bevorzugt durch ¹H-Kernresonanzspektroskopie bestimmt werden.

Der durchschnittliche Schwefelgehalt kann durch Analyse mit einem Gerät der Firma LECO (LECO SC-144 DR) unter Verwendung von ASTM 6741-01 Methode B bestimmt werden.

Der durchschnittliche Stickstoffgehalt kann mittels Kjeldahl-Methode oder unter Nutzung eines Elemental Analyser, beispielsweise Carlo Erba EA 1108 (Verbrennung der Substanz und Bestimmung von N₂) , bestimmt werden.

Die silatranhaltigen Partikel können zusätzlich zu den Silatranen der allgemeinen Formel I Verbindungen die mit Alkyloxygruppen (Alkyl-O-) substituierte Siliciumatome aufweisen, zu weniger als 10 Gew.-%, bevorzugt zu weniger als 8 Gew.-%, besonders bevorzugt zu weniger als 5 Gew.-%, ganz besonders bevorzugt zu weniger als 3 Gew.-%, enthalten. Diese Verbindungen können eine Nebenkomponente des Silatrans der allgemeinen Formel I sein.

Die mit Alkyloxygruppen (Alkyl-O-) substituierten Siliciumatome können eine Si(O-Alkyl)₄, -Si(O-Alkyl)₃, -Si(O-Alkyl)₂ oder -Si(O-Alkyl) Struktur besitzen. Bevorzugtes Alkyl kann dabei Methyl- oder Ethyl- sein.

Die Nebenkomponenten können Verbindungen der Formel (EtO)₃Si-CH₂-CH₂-CH₂-S_{b}-CH₂-CH₂-CH₂-Si(OEt)₃ mit b = eine Zahl zwischen 1 und 10 sein.

Die Nebenkomponenten können Verbindungen der Formel (EtO)₃Si-CH₂-CH₂-CH₂-S_{b}-CH₂-CH₂-CH₂-Si(OEt)₃ mit b = eine Zahl zwischen 1 und 10 sein, bei denen die Ethoxygruppen teilweise mit Triethanolamin oder Triisopropanolamin ersetzt sind. Die Nebenkomponenten können Verbindungen, wie sie in WO 2008084885 A beschrieben sind, sein.

Die Silatrane der allgemeinen Formel I können weniger als 15 Gew.-%, bevorzugt weniger als 12 Gew.-%, besonders bevorzugt weniger als 8 Gew.-%, ganz besonders bevorzugt weniger als 5 Gew.-%, von Verbindungen der allgemeinen Formel II 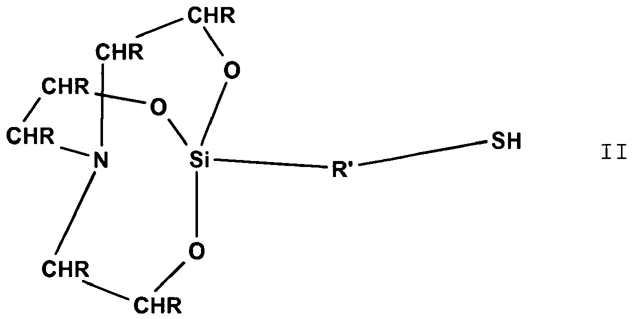 enthalten, wobei R und R' die oben ausgeführten Bedeutungen haben.

Die erfindungsgemäßen silatranhaltigen Pratikel können einen APC-Wert bei der pneumatischen Förderung von 0,01 bis 80 Gew.-%, bevorzugt 0,01 bis 50 Gew.-%, besonders bevorzugt 0,1 bis 50 Gew.-%, ganz besonders bevorzugt 0,1 bis 30 Gew.-%, haben. Die erfindungsgemäßen silatranhaltigen Pratikel können einen APC-Wert bei der pneumatischen Förderung kleiner als 70 Gew.-%, bevorzugt kleiner als 50 Gew.-%, besonders bevorzugt kleiner als 30 Gew.-%, ganz besonders bevorzugt kleiner 10 Gew.-%, haben.

Ein weiterer Gegenstand der Erfindung ist ein Verfahren zur Herstellung der erfindungsgemäßen silatranhaltigen Partikel, welches dadurch gekennzeichnet ist, dass man 55 bis 99 Gew.-%, bevorzugt 60 bis 90 Gew.-%, besonders bevorzugt 65 bis 85 Gew.-%, ganz besonders bevorzugt 75 bis 85 Gew.-%, bezogen auf das Gesamtgewicht der silatranhaltigen Partikeln, Silatran der allgemeinen Formel I und den Kautschuk mischt und mindestens einem formgebenden Schritt unterzieht.

Mischen und Formgebung können in einem Verfahrensschritt durchgeführt werden.

Die Formgebung kann nach dem Mischen der Mischungsbestandteile in einem oder mehreren separaten Verfahrensschritten erfolgen. Durch die Formgebung können Formkörper, Schülpen oder Kompaktate entstehen, die in einem weiteren Verfahrensschritt gebrochen, zerkleinert oder gerundet werden können. Das Brechen, Zerkleinern oder Runden der Partikeln kann mittels Siebgranulator, Brecher, Mühle oder Granulierteller erfolgen.

Das Mischen des Silatrans der allgemeinen Formel I mit dem Kautschuk und gegebenenfalls weiteren Additiven kann in einem Schaufelmischer, einem Innenmischer, einem Ringschichtmischer, einem Extruder, einem Trommelmischer, einem Kneter, einem Eirich-Mischer, einem Ringtrogmischer, einem Planetenmischer, einem Rohrmischer, einem Schwerkraftmischer, einem Pflugscharmischer oder auf einem Walzenstuhl erfolgen.

Kautschuk und gegebenenfalls weitere Additive oder Additivgemische können dem Silatran unabhängig voneinander vor oder während dem Mischvorgang zugegeben werden. Die Zugabe des Kautschuks oder weiterer Additive und Additivgemische kann durch Sprühen mit Ein- oder Mehrstoffdüsen, durch Zutropfen, durch kontinuierliches oder diskontinuierliches Dosieren, durch Schneckenförderer oder durch Zugabe mittels Vibrationsförderern erfolgen.

Der Kautschuk kann in gelöster Form zugegeben werden. Vorzugsweise kann der Kautschuk in einem Öl, vorzugsweise Mineralöl, gelöst sein.

Formgebungsschritte können walzen, pressen, extrudieren, verdichten, rollgranulieren, sprühgranulieren, siebgranulieren oder matritzenpressen sein.

Eingesetzte Walzen können glatt, profiliert oder perforiert sein.

Der Formgebungsschritt kann in einem Zahnradgranulator erfolgen.

Besonders bevorzugt können silatranhaltige Partikel Walzengranulate, Sprühgranulate und Extrudate sein.

Die Silatrane der allgemeinen Formel I können vor dem Mischvorgang mechanisch vorbehandelt, beispielsweise gemahlen, gebrochen, verrieben oder zerkleinert, sein. Die Silatrane der allgemeinen Formel I können einen Median der Partikelgrößenverteilung, gemessen durch Laserbeugung, von kleiner 1000µm, vorzugsweise kleiner 500µm, besonders bevorzugt kleiner 250µm, ganz besonders bevorzugt kleiner 100µm, haben.

Die erfindungsgemäßen silatranhaltigen Partikel können in Kautschukmischungen eingesetzt werden.

Ein weiterer Gegenstand der Erfindung ist ein Verfahren zur Herstellung von Kautschukmischungen, welches dadurch gekennzeichnet ist, dass man
(a) mindestens einen Kautschuk,
(b) mindestens einen Füllstoff und
(c) die erfindungsgemäßen silatranhaltigen Partikel mischt.

Kautschukmischungen können Polymere und Kautschukhilfsmittel enthalten.

Als Füllstoffe können für die Kautschukmischungen eingesetzt werden:
- Ruße, beispielsweise Flammruß, Furnaceruß, Gasruß oder Thermalruß. Die Ruße können eine BET-Oberfläche von 20 bis 200 m²/g haben. Die Ruße können gegebenenfalls auch Heteroatome, wie zum Beispiel Si, enthalten.
- Amorphe Kieselsäuren, hergestellt zum Beispiel durch Fällung von Lösungen von Silikaten (gefällte Kieselsäuren) oder Flammenhydrolyse von Siliciumhalogeniden (pyrogene Kieselsäuren). Die amorphen Kieselsäuren können eine spezifische Oberfläche von 5 bis 1000 m²/g, vorzugsweise 20 bis 400 m²/g, (BET-Oberfläche) und eine Primärteilchengrößen von 10 bis 400 nm haben. Die Kieselsäuren können gegebenenfalls auch als Mischoxide mit anderen Metalloxiden, wie Al-, Mg-, Ca-, Ba-, Zn- und Titanoxiden, vorliegen.
- Synthetische Silikate, wie Aluminiumsilikat oder Erdalkalisilikate, beispielsweise Magnesiumsilikat oder Calciumsilikat. Die synthetischen Silikate können eine BET-Oberfläche von 20 bis 400 m²/g und einen Primärteilchendurchmesser von 10 bis 400 nm haben.
- Synthetische oder natürliche Aluminiumoxide und - hydroxide.
- Natürliche Silikate, wie Kaolin und andere natürlich vorkommende Kieselsäuren.
- Carbonate, bevorzugt Calciumcarbonat.
- Glasfaser und Glasfaserprodukte (Matten, Stränge) oder Mikroglaskugeln.

Bevorzugt können amorphe Kieselsäuren, hergestellt durch Fällung von Lösungen von Silikaten (gefällte Kieselsäuren), mit BET-Oberflächen von 20 bis 400 m²/g eingesetzt werden. Die amorphen Kieselsäuren können in Mengen von 5 bis 150 Gew.-Teilen, jeweils bezogen auf 100 Teile Kautschuk (phr), eingesetzt werden.

Die genannten Füllstoffe können alleine oder im Gemisch eingesetzt werden.

In einer bevorzugten Ausführung können die Kautschukmischungen 10 bis 150 Gew.-Teile oxidische oder silikatische Füllstoffe, gegebenenfalls zusammen mit 0 bis 100 Gew.-Teilen Ruß, sowie 1 bis 50, bevorzugt 2 bis 30, besonders bevorzugt 5 bis 15 Gew.-Teile der erfindungsgemäßen silatranhaltigen Partikeln, jeweils bezogen auf 100 Gew.-Teile Kautschuk, enthalten.

Für die Herstellung der Kautschukmischungen eignen sich neben Naturkautschuk auch Synthesekautschuke. Bevorzugte Synthesekautschuke sind beispielsweise bei W. Hofmann, Kautschuktechnologie, Genter Verlag, Stuttgart 1980, beschrieben. Sie umfassen unter anderem
- Polybutadien (BR);
- Polyisopren (IR);
- Styrol/Butadien-Copolymerisate (SBR), beispielsweise Emulsions-SBR (E-SBR) oder Lösungs-SBR (L-SBR). Die Styrol/Butadien-Copolymerisate können einen Styrolgehalt von 1 bis 60 Gew.-%, vorzugsweise 2 bis 50 Gew.-%, besonders bevorzugt 10 bis 40 Gew.-%, ganz besonders bevorzugt 15 bis 35 Gew.-%, aufweisen;
- Chloroprenkautschuk (CR);
- Isobutylen/Isopren-Copolymerisate (IIR);
- Butadien/Acrylnitril-Copolymere mit Acrylnitrilgehalten von 5 bis 60, vorzugsweise 10 bis 50 Gew.-% (NBR), besonders bevorzugt 10 bis 45 Gew.-% (NBR), ganz besonders bevorzugt 19 bis 45 Gew.-% (NBR);
- teilhydrierter oder vollständig hydrierter NBR-Kautschuk (HNBR);
- Ethylen/Propylen/Dien-Copolymerisate (EPDM) oder Ethylen/Propylen-Copolymerisate (EPM);
- oben genannte Kautschuke, die zusätzlich funktionelle Gruppen besitzen, wie zum Beispiel Carboxy- , Silanol- oder Epoxygruppen, beispielsweise Epoxidierter NR, Carboxyfunktionalisierter NBR oder Silanol- (-SiOH) bzw. Silylalkoxy-funktionalisierter (-Si-OR) SBR;
   sowie Mischungen dieser Kautschuke. Für die Herstellung von PKW-Reifenlaufflächen sind insbesondere anionisch polymerisierte L-SBR-Kautschuke (Lösungs-SBR) mit einer Glastemperatur oberhalb von -50 °C sowie deren Mischungen mit Dienkautschuken von Interesse.

Die Kautschukmischungen können weitere Kautschukhilfsmittel, wie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Verzögerer, Metalloxide sowie Aktivatoren, wie beispielsweise Triethanolamin oder Hexantriol, enthalten.

Weitere Kautschukhilfsmittel können sein: Polyethylenglykol oder/und Polypropylenglykol oder/und Polybutylenglykol mit Molgewichten zwischen 50 und 50.000 g/mol, bevorzugt zwischen 50 und 20.000 g/mol, besonders bevorzugt zwischen 200 und 10.000 g/mol, ganz besonders bevorzugt zwischen 400 und 6.000 g/mol, außerordentlich bevorzugt zwischen 500 und 3.000 g/mol,
kohlenwasserstoffterminiertes Polyethylenglykol Alk-O-(CH₂-CH₂-O)_{yI}-H bzw. Alk-(CH₂-CH₂-O)_{yI}-Alk,
kohlenwasserstoffterminiertes Polypropylenglykol Alk-O-(CH₂-CH(CH₃)-O)_{yI}-H bzw. Alk-O-(CH₂-CH(CH₃)-O)_{yI}-Alk,
kohlenwasserstoffterminiertes Polybutylenglykol Alk-O-(CH₂-CH₂-CH₂-CH₂-O)_{yI}-H, Alk-O-(CH₂-CH(CH₃)-CH₂-O)_{yI}-H, Alk-O-(CH₂-CH₂-CH₂-CH₂-O)_{yI}-Alk oder Alk-O-(CH₂-CH(CH₃)-CH₂-O)_{yI}-Alk,
mit y^{I} im Mittel 2-25, bevorzugt y^{I} im Mittel 2-15, besonders bevorzugt y^{I} im Mittel 3-8 und 10-14, ganz besonders bevorzugt y^{I} im Mittel 3-6 und 10-13, und Alk gleich ein verzweigter oder unverzweigter, unsubstituierter oder substituierter, gesättigter oder ungesättigter Kohlenwasserstoff mit 1 bis 35, bevorzugt 4 bis 25, besonders bevorzugt 6 bis 20, ganz besonders bevorzugt 10 bis 20, außerordentlich bevorzugt 11 bis 14, Kohlenstoffatomen,
polyethylenglykol-, polypropylenglykol-, polybutylenglykol-, oder mit Mischungen davon verethertes Neopentylglykol HO-CH₂-C(Me)₂-CH₂-OH, Pentaerythrit C(CH₂-OH)₄ oder Trimethylolpropan CH₃-CH₂-C(CH₂-OH)₃, wobei die Wiederholeinheiten von Ethylenglykol, Propylenglykol oder/und Butylenglykol in den veretherten Polyalkoholen zwischen 2 und 100, bevorzugt zwischen 2 und 50, besonders bevorzugt zwischen 3 und 30, ganz besonders bevorzugt zwischen 3 und 15, sein kann.

Zur Mittelwertberechnung von y^{I} kann die analytisch bestimmbare Menge an Polyalkylenglykoleinheiten zur analytisch bestimmbaren Menge an -Alk ins Verhältnis gesetzt werden [Menge Polyalkylenglykoleinheiten)/(Menge -Alk)]. Zur Bestimmung der Mengen kann zum Beispiel die ¹H- und ¹³C-Kernresonanzspektroskopie eingesetzt werden.

Die Kautschukhilfsmittel können in bekannten Mengen, die sich unter anderem nach dem Verwendungszweck richten, eingesetzt werden. Übliche Mengen je eingesetztes Verarbeitungshilfsmittel können Mengen von 0,001 bis 50 Gew.-%, bevorzugt 0,001 bis 30 Gew.-%, besonders bevorzugt 0,01 bis 30 Gew.-%, ganz besonders bevorzugt 0,1 bis 30 Gew.%, bezogen auf Kautschuk (phr), sein.

Die Kautschukmischungen können schwefelvulkanisierbare Kautschukmischungen sein.

Die Kautschukmischungen können peroxidisch vernetzbare Kautschukmischungen sein.

Als Vernetzer können Schwefel oder schwefelspendende Substanzen eingesetzt werden. Der Schwefel kann in Mengen von 0,1 bis 10 Gew.-%, bevorzugt 0,1 bis 5 Gew.-%, bezogen auf Kautschuk, eingesetzt werden.

Als Beschleuniger können 2-Mercaptobenzothiazol, Dibenzothiazyldisulfid, Zinkmercaptobenzothiazol, 2-(Morpholinothio)benzothiazol, Diisopropylbenzothiazylsulfenamid, N-Cyclohexyl-2-benzothiazylsulfenamid, N,N-Dicyclohexyl-2-benzothiazylsulfenamid, N-tert.-Butyl-2-benzothiazylsulfenamid, Benzothiazyl-2-sulfenmorpholid, N-Dicyclohexyl-2-benzothiazylsulfenamid, Tetramethylthiurammonosulfid, Tetramethylthiuramdisulfid, Tetraethylthiuramdisulfid, Tetrabutylthiuramdisulfid, Tetrabenzylthiuramdisulfid, Tetraisobutylthiuramdisulfid, N,N'-Dimethyl-N,N'-diphenylthiuramdisulfid, Dipentamethylenthiuramdisulfid Dipentamethylenthiuramtetra/hexasulfid, N,N'-Ethylthioharnstoff, N,N'-Diethylthioharnstoff, N,N'-Diphenylthioharnstoff, N'-(3,4-dichlorphenyl)-N,N'-dimethylthioharnstoff, N,N'-Dibutylthioharnstoff, N,N,N'-Tributylthioharnstoff, Zinkdimethyldithiocarbamat, Zinkdiethyldithiocarbamat, Zinkdibutyldithiocarbamat, Zinkdiisobutyldithiocarbamat Zinkdibenzyldithiocarbamat, Zinkethylphenyldithiocarbamat, Zinkpentamethylendithiocarbamat, Zinkdiisononyldithiocarbamat, Zinkdiamyldithiocarbamat, Tellurdiethyldithiocarbamat, Kupferdimethyldithiocarbamat, Kupferdibutyldithiocarbamat, Wismutdimethyldithiocarbamat, Cadmiumdiethyldithiocarbamat, Selendiethyldithiocarbamat, Piperidinpentamethylendithiocarbamat, Nickeldimethyldithiocarbamat, Nickeldiethyldithiocarbamat, Nickeldibutyldithiocarbamat, Nickeldiisobutyldithiocarbamat, Nickeldibenzyldithiocarbamat, Bleidiamyldithiocarbamat, Natriumdimethyldithiocarbamat Natriumdiethyldithiocarbamat, Natriumdibutyldithiocarbamat, Natriumdiisobutyldithiocarbamat oder Natriumdibenzyldithiocarbamat eingesetzt werden.

Als Zweitbeschleuniger können Diphenylguanidin, Di-o-tolylguanidin, o-Tolylbiguanidin, N,N'-diphenylguanidin, Hexamethylentetramin, Kondensationsprodukte homologer Acroleine mit aromatischen Basen oder Kondensationsprodukte von Aldehyden mit Aminen eingesetzt werden.

Die erfindungsgemäßen silatranhaltigen Partikel können als Haftvermittler zwischen anorganischen Materialien (zum Beispiel Glaskugeln, Glasplittern, Glasoberflächen, Glasfasern, Metallen, oxidischen Füllstoffen, Kieselsäuren) und organischen Polymeren (zum Beispiel Duroplasten, Thermoplasten, Elastomeren) beziehungsweise als vernetzungsmittel und Oberflächenmodifizierungsmittel für oxidische Oberflächen verwendet werden. Die Silatrane der Formel I können als Kopplungsreagenzien in gefüllten Kautschukmischungen, beispielsweise Reifenlaufflächen, technischen Gummiartikeln oder Schuhsolen, verwendet werden.

Die Zugabe der erfindungsgemäßen silatranhaltigen Partikel, sowie die Zugabe der Füllstoffe und Additive im Mischprozess können bei Massetemperaturen von 90 bis 230°C, bevorzugt 110 bis 210 °C, besonders bevorzugt 120 bis 190°C, erfolgen. Die Zugabe der erfindungsgemäßen silatranhaltigen Partikel kann zusammen mit weiteren Kautschukhilfsmitteln erfolgen.

Die Mischung der Kautschuke mit dem Füllstoff, gegebenenfalls Kautschukhilfsmitteln und der erfindungsgemäßen silatranhaltigen Partikel kann in bekannten Mischaggregaten, wie Walzen, Innenmischern und Mischextrudern, durchgeführt werden.

Die Vulkanisation der Kautschukmischungen kann bei Temperaturen von 90 bis 230°C, bevorzugt 110 bis 210 °C, besonders bevorzugt 120 bis 190°C, gegebenenfalls unter Druck von 10 bis 200 bar, erfolgen.

Die Kautschukmischungen können zur Herstellung von Formkörpern, zum Beispiel für die Herstellung von Luftreifen, Reifenlaufflächen, Kabelmänteln, Schläuchen, Treibriemen, Förderbändern, Walzenbelägen, Reifen, Schuhsohlen, Dichtungsringen und Dämpfungselementen, verwendet werden.

### Beispiele:

Es werden folgende Rohstoffe für die Beispiele verwendet:
Triethanolamin:
   Das verwendete Triethanolamin ist von der Firma BASF AG und besitzt einen Wassergehalt von 0,28 mg/kg.
Bis(triethoxysilylpropyl)polysulfid:
   Si 266 der Firma Evonik-Degussa GmbH

Das für die Versuche verwendete Bis(triethoxysilylpropyl)polysulfid Si 266 enthält laut NMR-Analyse 2,2 Gew.-% Bis(triethoxysilylpropyl)monosulfid, 80,9 Gew.-% Bis(triethoxysilylpropyl)disulfid, 13,1 Gew.-% Bis(triethoxysilylpropyl)trisulfid, 2,0 Gew.-% Bis(triethoxysilylpropyl)tetrasulfid und 1,2 Gew.-%-Bis(triethoxysilylpropyl)pentasulfid. Die ermittelte durchschnittliche Kettenlänge der Polysulfidmischung beträgt 2,2 (berücksichtigt wird der Mittelwert von S1-S10). Im verwendeten Bis(triethoxysilylpropyl)-polysulfid sind 0,5 Gew.-% 3-Chlorpropyl-(triethoxysilan) enthalten. Der durch ²⁹Si-NMR bestimmbare Monomergehalt beträgt 87,6 Gew.-%, bezogen auf die detektierten Si-Atome.

### Beispiel 1:

### a.Herstellung des Silatrans gemäß Formel I:

In einer Apparatur mit Kolben und Rückflußkühler werden unter Schutzgas 512 g Si 266 mit 319,2 g Triethanolamin (Firma BASF AG), 1000 g Ethanol und 4 g NaOH bei Raumtemperatur vermischt. Die Mischung wird für 20 h bei 35°C gerührt.

Das ausgefallene, farblose Produkt wird abfiltriert, mit kaltem Ethanol gewaschen und stufenweise (Temperaturrampe) bei bis zu 100°C und bis zu 5-10 mbar getrocknet. Es werden 480 g (M = 501,6 g/mol) festes Produkt mit >85% Bis(silatranylpropyl)-disulfid-Gehalt laut NMR-Analyse isoliert.

Der Schmelzbereich des isolierten Produktes beträgt 140-146°C.

### b.Herstellung der erfindungsgemäßen silatranhaltigen Partikel:

Zunächst wird eine Polymerlösung aus 86 Gew.-Teilen eines paraffinbasierenden Mineralöls (Catenex S 925, Firma Shell) und 14 Gew.-Teilen SBR-Polymer der Qualität 1500 (Heyplast SK 50 C der Firma Paul Tiefenbacher) hergestellt. Hierzu werden beide Komponenten auf ca. 140 °C erhitzt und bis zum vollständigen Auflösen des Polymers gerührt (ca. 4 Stunden).

83 Gew.-Teile Silatran gemäß Formel I aus Beispiel Ia werden nun mit 17 Gew.-Teilen dieser Polymerlösung beaufschlagt und vermischt. Zum Einsatz kommt ein Mischer der Marke Lödige mit zugeschalteten Messerköpfen. Die Mischdauer ist abhängig von der Zielkonsistenz des pulverförmigen Produktes. Diese wird nach zirka 2 Minuten erreicht. Am Ende des Mischvorganges soll das Produkt staubfrei, aber noch rieselfähig vorliegen. Die mit der Polymerlösung vermengten silatranhaltigen Partikel werden danach mit einem Zahnradgranulator der Marke BEPEX kompaktiert bzw. granuliert.

Die erhaltenen, zylinderförmigen Granulate haben eine Länge von 1-1,5 cm. Die Granulate sind nicht klebrig, weich und lassen sich ohne großen Kraftaufwand leicht zerdrücken.

Die erfindungsgemäßen silatranhaltigen Partikel aus Beispiel 1b haben eine mittlere Rundheit von 0,4, eine mittlere Elongation von 1,75, ein mittleres Aspektverhältnis von 1,75 und eine mittlere Konvexität von 0,95. Die erfindungsgemäßen silatranhaltigen Partikel aus Beispiel 1 haben eine Rundheit von 0,11 bis 0,96. Die erfindungsgemäßen silatranhaltigen Partikel aus Beispiel 1 haben eine Elongation von 1,02 bis 3,02. Die erfindungsgemäßen silatranhaltigen Partikel aus Beispiel 1 haben ein Aspektverhältnis von 1,06 bis 2,94. Die erfindungsgemäßen silatranhaltigen Partikel aus Beispiel 1 haben eine Konvexität von 0,87 bis 0,98.

### Beispiel 2: Kautschukmischungen

Die für die Kautschukmischungen verwendete Rezeptur ist in der folgenden Tabelle 1 angegeben. Dabei bedeutet die Einheit phr Gewichtsanteile, bezogen auf 100 Teile des eingesetzten Rohkautschuks. Die Silane werden equimolar, das heißt, mit gleicher Stoffmenge dosiert. Das allgemeine Verfahren zur Herstellung von Kautschukmischungen und deren Vulkanisate ist in dem Buch: "Rubber Technology Handbook", W. Hofmann, Hanser Verlag 1994 beschrieben.

**Tabelle 1**

| Substanz | Mischung 1 Referenz [phr] | Mischung 2 [phr] |
|---|---|---|
| **1. Stufe** | | |
| Buna VSL 5025-1 ZnO | 96 | 96 |
| Buna CB 24 | 30 | 30 |
| Ultrasil 7000 GR | 80 | 80 |
| Bis(silatranylpropyl)disulfid | 6,1 | - |
| Erfindungsgemäße | - | 7,35 |
| silatranhaltige Partikel aus | | |
| Beispiel 1b | | |
| ZnO | 3 | 3 |
| Stearinsäure | 2 | 2 |
| Naftolen ZD | 10 | 10 |
| Vulkanox 4020 | 1,5 | 1,5 |
| Protektor G 3108 | 1 | 1 |
| **2. Stufe** | | |
| Batch Stufe 1 | | |
| **3. Stufe** | | |
| Batch Stufe 2 | | |
| Vulkacit D | 0 | 0 |
| Vulkacit CZ | 1,5 | 1,5 |
| Perkacit TBzTD | 0,2 | 0,2 |
| Schwefel | 2,2 | 2,2 |

Bei dem Polymer VSL 5025-1 handelt es sich um ein in Lösung polymerisiertes SBR-Copolymer der Bayer AG, mit einem Styrolgehalt von 25 Gew.-% und einem Butadiengehalt von 75 Gew.-%. Das Copolymer enthält 37,5 phr Öl und weist eine Mooney-Viskosität (ML 1+4/100°C) von 50 auf.

Bei dem Polymer Buna CB 24 handelt es sich um ein cis-1,4-Polybutadien (Neodymtyp) der Bayer AG, mit cis-1,4-Gehalt von mindestens 96 % und einer Mooney-Viskosität von 44±5.

Ultrasil 7000 GR ist eine leicht dispergierbare Kieselsäure der Evonik-Degussa GmbH und besitzt eine BET-Oberfläche von 170 m²/g.

Als aromatisches Öl wird Naftolen ZD der Chemetall verwendet, bei Vulkanox 4020 handelt es sich um PPD der Bayer AG und Protektor G3108 ist ein Ozonschutzwachs der Paramelt B.V.. Vulkacit D (DPG) und Vulkacit CZ (CBS) sind Handelsprodukte der Bayer AG. Perkacit TBzTD (Tetrabenzylthiuramtetrasulfid) ist ein Produkt von Flexsys N.V..

Die Kautschukmischungen werden in einem Innenmischer entsprechend der Mischvorschrift in Tabelle 2 hergestellt.

**Tabelle 2:**

| | | Stufe 1 |
|---|---|---|
| Einstellungen | | |
| Mischaggregat | | Werner & Pfleiderer E-Typ |
| Drehzahl | | 80 min⁻¹ |
| Stempeldruck | | 5,5 bar |
| Leervolumen | | 1,58 L |
| Füllgrad | | 0,58 |
| Durchflußtemp. | | 80 °C |

| Mischvorgang | | |
|---|---|---|
| 0 bis | 1 min | Buna VSL 5025-1 + Buna CB 24 |
| 1 bis | 2 min | 1/2 Kieselsäure, ZnO, Stearinsäure, Naftolen ZD, Kopplungsagens |
| 2 bis | 4 min 4 min | 1/2 Kieselsäure, Vulkanox, Protektor Säubern |
| 4 bis | 5 min 5 min | Mischen Lüften |
| 5 bis | 6 min | Mischen und ausfahren |
| | | |
| Batch-Temp. | | 155-165°C |
| Lagerung | | 24 h bei Raumtemperatur |
| | | |

| | | Stufe 2 |
|---|---|---|
| Einstellungen | | |
| Mischaggregat | | Wie in Stufe 1 bis auf: |
| Drehzahl | | 80 min⁻¹ |
| Durchflußtemp. | | 90 °C |
| Füllgrad | | 0,56 |

| Mischvorgang | | |
|---|---|---|
| 0 bis | 2 min | Batch Stufe 1 aufbrechen |
| 2 bis | 5 min 5 min | Batchtemperatur 160°C durch Drehzahlvariation halten Ausfahren |
| | | |
| Batch-Temp. | | 155-165°C |
| Lagerung | | 4 h bei Raumtemperatur |

| | | Stufe 3 |
|---|---|---|
| Einstellungen | | |
| Mischaggregat | | wie in Stufe 1 bis auf |
| Drehzahl | | 40 min⁻¹ |
| Füllgrad | | 0,53 |
| Durchflußtemp. | | 50 °C |

| Mischvorgang | | |
|---|---|---|
| 0 bis | 2 min | Batch Stufe 2, Beschleuniger, Schwefel |
| | 2 min | ausfahren und auf Labormischwalzwerk Fell bilden |
| | | (Durchmesser 200 mm, Länge 450 mm, |
| | | Durchflußtemperatur 50°C) |
| | | |
| | | Homogenisieren: |
| | | 5* links, 5* rechts einschneiden und |
| | | 6* bei weitem Walzenspalt (6 mm) und |
| | | 3* bei engem Walzenspalt (3 mm) |
| | | Fell ausziehen. |
| | | |
| Batch-Temp. | | < 110°C |

In Tabelle 3 sind die Methoden für die Gummitestung zusammengestellt.

**Tabelle 3**

| Physikalische Testung | Norm/Bedingungen |
|---|---|
| ML 1+4, 100°C, 2. Stufe, 3. Stufe | DIN 53523/3, ISO 667 |
| Anvulkanisationsverhalten, 130°C | DIN 53523/4, ISO 667 |
| Anvulkanisationszeit t₅ | |
| Anvulkanisationszeit t₃₅ | |
| Vulkameterprüfung, 165°C | DIN 53529/3, IS06502 |
| Dmax-Dmin (dNm) | |
| t10% (min) und t90% (min) | |
| t80% - t20% (min) | |
| Zugversuch am Ring, 23°C | DIN 53504, ISO 37 |
| Zugfestigkeit (MPa) | |
| Bruchdehnung (%) | |
| Shore-A-Härte, 23°C (SH) | DIN 53 505 |
| DIN Abrieb | DIN ISO 4649 |

Die Tabelle 4 zeigt die Ergebnisse der gummitechnischen Prüfung.

**Tabelle 4**

| Mischung Nr. | | 1 | 2 |
|---|---|---|---|
| ML (1+4) | [ME] | 67 | 65 |
| t5 | [min] | 32,3 | 30,8 |
| t35 | [min] | 38, 6 | 36, 8 |
| Dmax-Dmin | [dNm] | 15,9 | 16,3 |
| t 10% | [min] | 3,3 | 3, 1 |
| t 90% | [min] | 7, 6 | 7,2 |
| t 80% - t 20% | [min] | 2,1 | 2,0 |
| Zugfestigkeit | [MPa] | 14,3 | 13,7 |
| Bruchdehnung | [%] | 375 | 370 |
| Shore-A-Härte | [SH] | 62 | 62 |
| DIN Abrieb | [mm³] | 90 | 90 |

Wie aus Tabelle 4 zu erkennen ist, liefern Kautschukmischungen, die das pulverförmige S2-Silatran (Referenz) beziehungsweise die erfindungsgemäßen silatranhaltigen Partikel enthalten gleichwertige gummitechnische Eigenschaften. Sowohl Rohmischungs- als auch Vulkanisatdaten stimmen überraschend gut überein. Die in WO 2007085521 A1 beschriebenen Vorteile des S2-Silatrans gegenüber dem Bis(triethoxysilylpropyl)-polysulfid Si 266 lassen sich somit auf die staubfreie granuläre Formulierung des S2-Silatrans übertragen.

### Beispiel 3

Pneumatische Förderbarkeit Bestimmt werden die Partikelgrößenverteilungen von silatranhaltigen Partikeln vor und nach der Förderung über eine Teststrecke. Über die Erhöhung des Staubanteils von silatranhaltigen Partikeln während der pneumatischen Förderung, lassen sich Rückschlüsse auf das Förderverhalten der eingesetzten silatranhaltigen Partikel ziehen. Der APC-Wert wird unter Verwendung einer pneumatischen Fördertestapparatur bestimmt [Käferstein P., Mörl L., Dalichau J., Behns W., Anlage zum Schlussbericht des AiF-Projektes "Zerfallsverhalten von Partikeln in Wirbelschichten", Forschungsvorhaben-Nr. 11151 B, Magdeburg, 1999, S. 17 - 21], wobei abweichend hiervon die Probe über einen Venturi-Injektor eingebracht wird. Die eingesetzte pneumatische Druckfördertestapparatur ist in DE 102007025928.1 beschrieben. Die pneumatische Druckfördertestapparatur besteht im wesentlichen aus
- zwei Förderrinnen,
- einem Luftstromregelventil,
- einem Venturi-Injektor,
- einer Förderstrecke ("Schlaufe + Bogen"),
- einem Laserbeugungsmessgerät,
- einem Abluftkasten und
- einer Schallschutzbox.

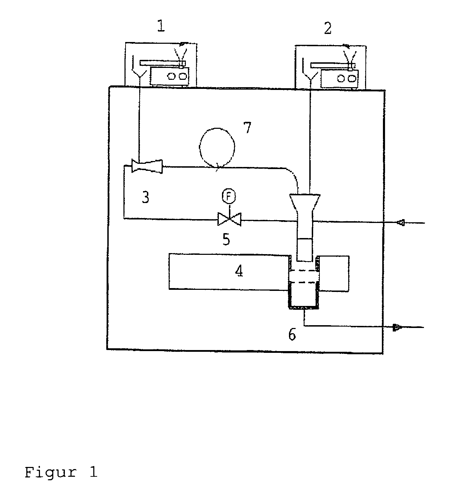

Figur 1 zeigt den Aufbau einer Förderapparatur:
1 Vibrationsrinne Belastungsstrecke,
2 Vibrationsrinne Referenzmessung,
3 Venturi-Injektor,
4 Laserbeugungsspektrometer,
5 Luftstromregelventil,
6 Abluftkasten,
7 Belastungsstrecke.

Die Schallschutzbox hat die Maße 1,9 * 1,3 * 1,0 m (L/H/B). Die Rohrleitungen aus Edelstahl besitzen einen Innendurchmesser von 44 mm. Die Schlaufe hat einen Umfang von 1,5 m. Der Bogen hat eine Länge von 0,5 m. Die Luft und der benötigte Förderdruck wird aus dem Druckluftnetz (6 bar) bezogen. Über das LuftstromRegelventil wird der Luftstrom bzw. die Luftgeschwindigkeit eingestellt, wobei die Anlage für einen maximalen Luftstrom von 180 m³/h ausgelegt ist. Die Luftgeschwindigkeit wird auf 14 m/s, bezogen auf den Rohrquerschnitt von 44 mm, eingestellt. Die Dosierung der silatranhaltigen Partikel in das Fallrohr erfolgt über eine Vibrationsrinne. Die Vibrationsrinne und die Öffnung des Fallrohres sind zum Zwecke der Schallisolierung eingehaust. Zum Befüllen des Trichters lässt sich ein durchsichtiger Kunststoffdeckel öffnen. Die Förderrate an der Vibrationsrinne wird so gewählt, dass sich eine Feststoffbeladung von 27 g/kg Luft ergibt. Zur Einschleusung der silatranhaltigen Partikel in die Förderstrecke wird ein Venturi-Injektor benötigt. Der Injektor hat einen Durchmesser an der Engstelle von 22 mm und eine Beschleunigungsstrecke von 50 mm (Länge von der Probenaufgabe über einen Trichter bis zum Diffusorende). Nach dem Injektor folgt die Förderstrecke (Schlaufe + Bogen), in der die silatranhaltigen Partikel beansprucht werden. Anschließend gelangen die silatranhaltigen Partikel über einen Trichter in den aufgeweiteten Laserstrahl des Laserbeugungsmessgerätes. Die Partikelgrößenverteilung wird aufgenommen. Der Luft-Partikelstrom gelangt über den Abluftkasten in die Absaugleitung und damit in das Absaugsystem des Gebäudes. Für eine Referenzmessung ohne Beanspruchung der silatranhaltigen Partikel steht die zweite Vibrationsrinne zur Verfügung. Hier führt das entsprechende Fallrohr direkt in den Trichter und zu der Messzone der Laserbeugung und anschließend ebenfalls in die Absaugleitung.

Der APC-Wert kennzeichnet das Abriebs- und Bruchverhalten von silatranhaltigen Partikel bei der pneumatischen Förderung. Der APC-Wert ist die Differenz des Partikelgrößenanteils <125µm (Feinstanteil) in Gew.-% nach pneumatischer Förderung der silatranhaltigen Partikel und des Partikelgrößenanteils <125µm (Feinstanteil) in Gew.-% der unbeanspruchten silatranhaltigen Partikel (ohne pneumatische Förderung).

Zur Bestimmung der pneumatischen Förderbarkeit wird ein Silatran gemäß Beispiel 1a, erfindungsgemäße silatranhaltige Partikel gemäß Beispiel 1b und eine extrudierte und zerkleinerte Kautschukmischung enthaltend 3,2 Gew.-% Silatran gemäß Beispiel 1a in der vorgenannten pneumatischen Förderapparatur untersucht. Die Ergebnisse sind in Tabelle 5 zusammengefasst.

**Tabelle 5**

| | Silatran gemäß Beispiel 1a | Silatranhaltige Partikel gemäß Beispiel 1b | Kautschukmischung enthaltend 3,2 Gew.-% Silatran gemäß Beispiel 1a |
|---|---|---|---|
| | Vergleichs-beispiel | | Vergleichs-beispiel |
| Feinstanteil <125µm ohne pneumatische Förderung (Gew.-%) | 12, 3 | 0,2 | 0 |
| Feinstanteil <125µm nach pneumatischer Förderung (Gew.-%) | n.b. | 0,3 | n.b. |
| APC-Wert (Gew.-%) | - | 0,1 | - |

| | | | |
|---|---|---|---|
| n.b.= nicht bestimmbar | | | |

Das Silatran gemäß Beispiel 1a (Vergleichsbeispiel) hat einen hohen Feinstanteil (Staubanteil) und führte auf Grund der ungenügenden Rieselfähigkeit zu Problemen bei der Probenaufgabe zur Messung der pneumatischen Förderbarkeit. Die Kautschukmischung enthaltend 3,2 Gew.-% Silatran gemäß Beispiel 1a hat einen Feinstanteil von 0%, kann aber nicht pneumatisch gefördert werden, da dies zu Verklebungen führt. Die erfindungsgemäßen silatranhaltigen Partikel gemäß Beispiel 1b zeigen einen niedrigen Feinstanteil und können pneumatisch gefördert werden, wobei der APC-Wert sehr klein ist.

## Patentansprüche

1. Silatranhaltige Partikel, **dadurch gekennzeichnet, dass** diese mindestens einen Kautschuk und 55 bis 99 Gew.-%, bezogen auf das Gesamtgewicht der silatranhaltigen Partikeln, eines Silatrans der allgemeinen Formel I, 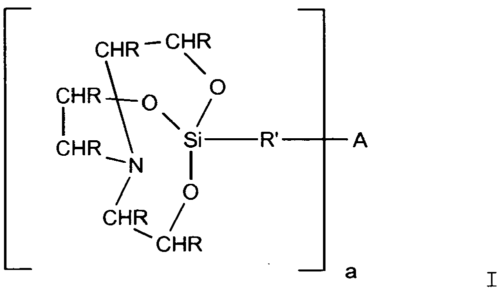 enthalten, wobei R gleich oder verschieden und H, eine cyclische, geradkettige oder verzweigte C₁ bis C₁₂- Alkylgruppe, eine Carboxylgruppe (-COOH), eine substituierte oder unsubstituierte Arylgruppe oder eine substituierte oder unsubstituierte Aralkylgruppe ist,
R' gleich oder verschieden und eine verzweigte oder unverzweigte, gesättigte oder ungesättigte, aliphatische, aromatische oder gemischt aliphatische /aromatische zweibindige C₁-C₃₀-Kohlenwasserstoffgruppe ist,
a gleich 1 oder 2 ist,
A für a gleich 1 -SH, -NH₂, -SCN, -Cl, -H, -OR " , -O-CH₂-CH/O\CH₂,-O-C(O)-C(CH₃)=CH2, -NHR", - NR"₂, -CH=CH₂, -S-C(O)-R", -S-C(O)-N(R")₂ oder - S-C(S)-N(R")₂ ist, mit R" gleich oder verschieden und H, eine cyclische, geradkettige oder verzweigte C₁ bis C₁₈- Alkylgruppe, eine substituierte oder unsubstituierte Arylgruppe oder eine substituierte oder unsubstituierte Aralkylgruppe ist,
und
A für a gleich 2 -Sₓ- ist, mit x eine mittlere Schwefelkettenlänge von 1,1 bis 5 ist.

2. Silatranhaltige Partikel gemäß Anspruch 1, **dadurch gekennzeichnet, dass** diese eine Elongation von 1 bis 20 haben.

3. Silatranhaltige Partikel gemäß Anspruch 1, **dadurch gekennzeichnet, dass** diese ein Aspektverhältnis von 1 bis 20 haben.

4. Silatranhaltige Partikel gemäß Anspruch 1, **dadurch gekennzeichnet, dass** diese eine Konvexität von 0,1 bis 1 haben.

5. Silatranhaltige Partikel gemäß Anspruch 1, **dadurch gekennzeichnet, dass** diese eine Rundheit von 0,1 bis 1 haben.

6. Verfahren zur Herstellung der silatranhaltigen Partikel gemäß Anspruch 1, **dadurch gekennzeichnet, dass** man 55 bis 99 Gew.-%, bezogen auf das Gesamtgewicht der silatranhaltigen Partikeln, Silatran der allgemeinen Formel I und den Kautschuk mischt und einem formgebenden Schritt unterzieht.

7. Verfahren zur Herstellung der silatranhaltigen Partikel gemäß Anspruch 6, **dadurch gekennzeichnet, dass** der formgebenden Schritt walzen, pressen, extrudieren, verdichten, rollgranulieren, sprühgranulieren, siebgranulieren oder matritzenpressen ist.

8. Verfahren zur Herstellung von Kautschukmischungen, **dadurch gekennzeichnet, dass** man
(a) mindestens einen Kautschuk,
(b) mindestens einen Füllstoff und
(c) die silatranhaltigen Partikel gemäß Anspruch 1 mischt.

## Claims

1. Silatrane-containing particles, **characterized in that** these comprise at least one rubber and from 55 to 99% by weight, based on the total weight of the silatrane-containing particles, of a silatrane of the general formula I, 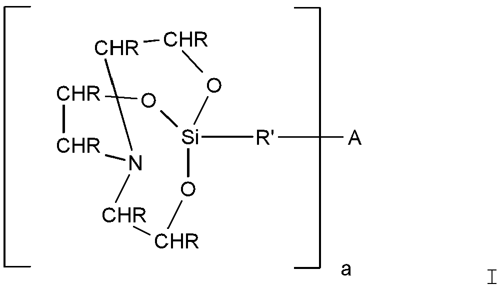 where R is identical or different and is H, a cyclic, straight-chain or branched C₁-C₁₂-alkyl group, a carboxy group (-COOH), a substituted or unsubstituted aryl group or a substituted or unsubstituted aralkyl group,
R' is identical or different and is a branched or unbranched, saturated or unsaturated, aliphatic, aromatic or mixed aliphatic/aromatic divalent C₁-C₃₀-hydrocarbon group,
a is 1 or 2,
A, for a equal to 1, is -SH, -NH₂, -SCN, -C1, -H, -OR", -O-CH₂-CH/O\CH_{2,} -O-C(O)-C(CH₃)=CH₂, -NHR", -NR"₂, -CH=CH₂, -S-C(O)-R", -S-C(O)-N(R")₂ or -S-C(S)-N(R")₂, where R" is identical or different and is H, a cyclic, straight-chain or branched C₁-C₁₈-alkyl group, a substituted or unsubstituted aryl group or a substituted or unsubstituted aralkyl group,
and
A, for a equal to 2, is -Sₓ-, where x is an average sulphur chain length of from 1.1 to 5.

2. Silatrane-containing particles according to Claim 1, **characterized in that** their elongation is from 1 to 20.

3. Silatrane-containing particles according to Claim 1, **characterized in that** their aspect ratio is from 1 to 20.

4. Silatrane-containing particles according to Claim 1, **characterized in that** their convexity is from 0.1 to 1.

5. Silatrane-containing particles according to Claim 1, **characterized in that** their roundness is from 0.1 to 1.

6. Process for the production of the silatrane-containing particles according to Claim 1, **characterized in that** from 55 to 99% by weight, based on the total weight of the silatrane-containing particles, of silatrane of the general formula I are mixed with the rubber and the mixture is subjected to a shaping step.

7. Process for the production of the silatrane-containing particles according to Claim 6,
**characterized in that** the shaping step is rolling, compression moulding, extrusion, compaction, rolling granulation, spray granulation, sieve granulation or matrix compression.

8. Process for the production of rubber mixtures, **characterized in that**
(a) at least one rubber,
(b) at least one filler and
(c) the silatrane-containing particles according to Claim 1
are mixed.

## Revendications

1. Particules contenant un silatrane, **caractérisées en ce qu**'elles contiennent au moins un caoutchouc et de 55 à 99 % en poids, par rapport au poids total des particules contenant un silatrane, un silatrane de formule générale I, 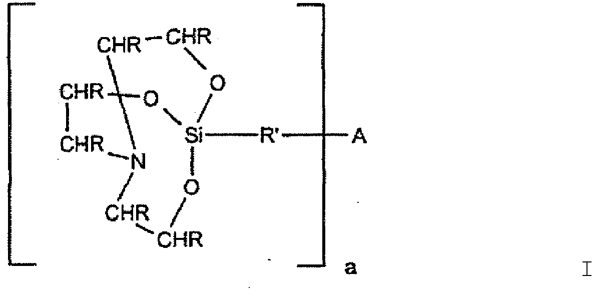 dans laquelle R est le même ou différent et est H, un groupe alkyle en C₁-C₁₂ cyclique, à chaîne droite ou ramifié, un groupe carboxy (-COOH), un groupe aryle substitué ou non substitué ou un groupe aralkyle substitué ou non substitué,
R' est le même ou différent et est un groupe hydrocarboné en C₁-C₃₀ ramifié ou non ramifié, saturé ou insaturé, aliphatique, aromatique ou aliphatique/ aromatique mixte,
a est égal à 1 ou 2,
A pour a égal 1 est -SH, -NH₂, -SCN, -Cl, -H, -OR " , -O-CH₂-CH/O\CH₂, -O-C(O)-C(CH₃)=CH₂, -NHR", -NR"₂, -CH=CH₂, -S-C(O)-R", -S-C(O)-N(R")₂ ou -S-C(S)-N(R")₂, où R" est le même ou différent et est H, un groupe alkyle en C₁-C₁₈ cyclique, à chaîne droite ou ramifié, un groupe aryle substitué ou non substitué ou un groupe aralkyle substitué ou non substitué,
et
A pour a égal 2 est -Sₓ, où x est une longueur moyenne d'atomes de soufre de 1,1 à 5.

2. Particules contenant un silatrane selon la revendication 1, **caractérisées en ce qu**'elles ont une élongation de 1 à 20.

3. Particules contenant un silatrane selon la revendication 1, **caractérisées en ce qu**'elles ont un rapport longueur/diamètre de 1 à 20.

4. Particules contenant un silatrane selon la revendication 1, **caractérisées en ce qu**'elles ont une convexité de 0,1 à 1.

5. Particules contenant un silatrane selon la revendication 1, **caractérisées en ce qu**'elles ont une rotondité de 0,1 à 1.

6. Procédé pour la préparation de particules contenant un silatrane selon la revendication 1, **caractérisé en ce qu**'on mélange 55 à 99 % en poids, par rapport au poids total des particules contenant un silatrane, de silatrane de formule générale I et le caoutchouc et on soumet le mélange à une étape de mise en forme.

7. Procédé pour la préparation de particules contenant un silatrane selon la revendication 6, **caractérisé en ce que** l'étape de mise en forme consiste en laminage, pressage, extrusion, compactage, granulation au rouleau, granulation par pulvérisation, granulation au tamis ou pressage à la matrice.

8. Procédé pour la préparation de compositions de caoutchouc, **caractérisé en ce qu**'on mélange
(a) au moins un caoutchouc,
(b) au moins une charge et
(c) les particules contenant un silatrane selon la revendication 1.
